# EUROPEAN PATENT SPECIFICATION

(11) **EP 3 689 144 B1**
(45) Date of publication and mention of the grant of the patent: **16.02.2022**
(21) Application number: 18860227.0
(22) Date of filing: 09.03.2018
(51) Int. Cl.: A21C 9/06

(54) **TURNTABLE COMPONENT OF FILLING-WRAPPING FOOD FORMING MACHINE**
DREHTISCHELEMENT FÜR EINE MASCHINE ZUM FÜLLEN UND WICKELN VON NAHRUNGSMITTELN
ÉLÉMENT DE PLATEAU TOURNANT D'UNE MACHINE DE FORMATION D'ALIMENTS D'ENVELOPPE-REMPLISSAGE

(30) Priority: 30.09.2017 CN 201710913590
(43) Date of publication of application: 05.08.2020
(73) Proprietor: Shanghai Soontrue Machinery Equipment Co., Ltd., Shanghai 210700 (CN)
(72) Inventor: HUANG, Song, Shanghai 201700 (CN)
(74) Representative: Osterhoff, Utz
(86) International application number: PCT/CN2018/078534
(87) International publication number: WO 2019/062031

(56) References cited:
- CN-A- 105 724 507
- CN-A- 106 818 971
- CN-A- 107 410 405
- CN-A- 107 410 406
- CN-U- 203 801 585
- CN-U- 204 697 808
- CN-U- 205 756 904
- CN-U- 205 756 906
- CN-U- 206 150 320
- CN-Y- 201 160 466
- JP-B1- 5 839 529
- US-A- 3 633 517
- US-A1- 2012 219 674
- US-A1- 2015 079 243

## Description

### TECHNICAL FIELD

The present application relates to a technical field of food processing, and more particularly to a rotary table assembly of a stuffed food forming machine.

### BACKGROUND

The volume of the apparatus for forming stuffed food is usually large, especially the dough wrapper processing device. How to miniaturize stuffed food forming machine has been a difficult problem in the field of food processing.

The Chinese patent application CN200820062031.X (filing date: Jan. 29, 2018, application name "DUMPLING MAKING MACHINE") disclosed a dumpling making machine which includes a dough wrapper feeding device, a stuffing injection device, a dumpling shaping device, a discharge tailstock and a driving device. The dumpling forming device includes a horizontal station rotary table body, a forming mold disposed on the surface of the rotary table body, a dough wrapper feeding apparatus, a dough wrapper receiving station and a stuffing receiving station which are corresponding to the stuffing injection device and are disposed on the rotary table body. A jacking device is arranged at a folding station, one side of a dumpling pushing station is provided with a pushing device, and the other side of the dumpling pushing station is provided with the discharge tailstock. The mold is flattened, clamped, opened, and unfolded in different stations under the control of a guide rail.

Furthermore, a Chinese patent application CN201610274834.0 (filing date: Apr. 28, 2016, application name "COMPACT STUFFED FOOD FORMING MACHINE") disclosed a compact stuffed food forming machine which belongs to the technical field of food processing and in particular to a compact stuffed food forming machine. The compact stuffed food forming machine includes a framework and a station rotary table body located on the framework. A dough wrapper forming device, a stuffing injection device, a pressing device and a discharge device are respectively disposed around the station rotary table body. A wrapper forming station is disposed on the wrapper forming device; a stuffing injection station is disposed on the stuffing injection device; a pressing station is disposed on the pressing device; and a discharging station is disposed on the discharging device. A split shaping mold is further disposed on the framework, and the split shaping mold includes a rotary wrapper receiving plate and a molding cup.

Prior art documents US2012/219674 A1 and US2015/079243 disclose rotary table assemblies comprising shaping molds according to the preamble of claim 1.

Neither of the above technologies has proposed a convenient and space-saving solution to process the dough and recycle the dough wrapper residues after cutting. As a result, the volume of the whole forming apparatus cannot be further reduced. At the same time, the wrapper residues recycle device is complicated and requires multiple control points, thus inducing high failure rate and high maintenance and operation costs.

### SUMMARY

In order to solve the problem that the volume of the stuffed food forming machine can not be further reduced, the present application provides a rotary table assembly of a stuffed food forming machine capable of effectively processing the dough and recycling the dough wrapper residues.

In order to achieve the above purpose, the present application provides:
a rotary table assembly of a stuffed food forming machine, which includes: a rotary table body defining an opening configured for dough residue to fall into and collecting the dough residue; and shaping molds evenly distributed on the rotary table body. A distance between an internal side of one of the shaping molds and a center of the rotary table body is configured to be larger than a distance between an internal side of the opening and the center of the rotary table body. The opening is a through hole penetrating the rotary table body. When a distance between an internal side of one of the shaping molds and a center of the rotary table assembly is larger than a distance between an internal side of the opening and the center of the rotary table assembly, the dough residue may easily drop into the opening, so as to be collected.

The opening is configured to be continuously defined on the rotary table body, namely, there is no break along the opening, which guarantees a continuous collection of the dough residue when the rotary table body is rotating. The structure of the opening must be continuously arranged to collect the dough residue while the rotary table body is rotating.

When the opening is circular, it may be defined at the center of the rotary table body.

When the opening is annular, it may be defined at the center or a center-outward position of the rotary table body.

The opening is configured to penetrate an upper surface and a lower surface of the rotary table body.

Relative positions of the shaping molds and the opening are as follows.

An upper surface of one of the shaping molds is configured to be located above an upper surface of the opening, and the one of shaping molds is configured to be arranged outside the opening.

Or an upper surface of one of the shaping molds is configured to be located above an upper surface of the opening, and a projection of the one of shaping modes in a vertical direction is configured to partially or completely fall within the opening.

A structure of the rotary table body is as follows.

The rotary table body is rectangular, circular or irregular.

A rotation sleeve connected with a worm wheel is configured to be connected to a bottom of the rotary table body. The worm wheel is configured to be connected with a worm screw, and the worm screw is configured to be connected with a motor.

The working principle of the rotary table assembly is as follows.

The motor drives the rotary table body to rotate the shaping molds which are connected to the rotary table body. The dough residue after cutting enters the opening on the rotary table body, so as to be collected. A base and a guiding plate which are arranged under the rotary table body are separated from the rotary table body and are static during working. A guiding rail is provided on both the base and the guiding plate respectively. Guiding rollers on the shaping molds are guided by the guiding rail to drive a catch plate and the molds to move up and down respectively.

The benefits of the rotary table assembly are as follows.
1. According to the present application, the opening on the rotary table assembly collects the dough residue and takes full advantage of the space below the rotary table assembly. A recycling bin may be provided below the opening to collect the dough residue, or a processing mechanism may be provided below the opening to process the dough residue for reuse. The above structure does not increase the size of the machine and requires no extra space. The size of present application is compact and is able to be further reduced, which is suitable for family, canteen or small shop.
2. According to the present application, the opening may be in any shape, as long as it is convenient for collection of the dough residue. When the distance between an internal side of the shaping molds and a center of the rotary table body is larger than the distance between an internal side of the opening and the center of the rotary table body, no matter the shaping molds are arranged outside the opening or projections of the shaping modes in a vertical direction partially or completely fall within the structure of the opening, the dough residue may conveniently fall into the opening without extra guiding device.
3. The present application adopts the motor to drive the worm screw and the worm wheel to drive the rotation sleeve and the rotary table body to rotate. The separate driving structure replaces the complicated cam mechanism under the rotary table body and solves the problem of single motor driving all the parts. More space may be used for collection and processing of the dough residue.

A structure of a rail is as follows.

A base is arranged under the rotary table body. A guiding plate is arranged between the base and the rotary table body, and the guiding plate is a cylinder as a whole. A first guiding rail is configured to be defined on an external surface of the guiding plate, and the first guiding rail cooperates with a first roller on a catch plate on the shaping mold to move the catch plate up and down.

The guiding plate is a continuous cylinder.

A disconnected portion is configured to be defined on the cylinder of the guiding plate. The disconnected portion is configured to be partly or entirely disconnected. The guiding plate may be provided at stations where structures of the shaping molds move up and down. The guiding plate is not needed for stations where height will not be adjusted.

At least one of the disconnected portion is configured to be defined.

A second guiding rail is configured to be defined on an outer edge of the base, and the second guiding rail cooperates with a second roller of the molding cup on the shaping mold to move the molding cup up and down.

The working principle of the guiding rail is as follows.

Specifically, the shaping molds adopts conventional structure. Each shaping mold includes a catch plate connected with a first roller below through a first connecting rod; and a molding cup provided in the catch plate and connected with a second roller below through a second connecting rod. Since the shaping molds are rotated with the rotating disc while the guiding plate and the base remain still, the catch plate moves up and down by the first roller moving along a wave-shaped track in the first guiding rail on the external surface of the guiding plate. The second guiding rail cooperates with the second roller to move the molding cups up and down. As a result, different parts of the shaping molds move up and down at different stations.

The benefits of the guiding rail are as follows.

The guiding plate cooperates with the base to move the catch plate and molding cups on the shaping mold up and down at different positions. Disconnected portions may be provided on both the first guiding rail on the guiding plate and the second guiding rail on the base, namely, the first and second guiding rails are only applied to stations where the heights need to be adjusted. Non-continuously arranged guiding rails reduce cost in material and are simple in structure.

### BRIEF DESCRIPTION OF THE ACCOMPANYING DRAWINGS

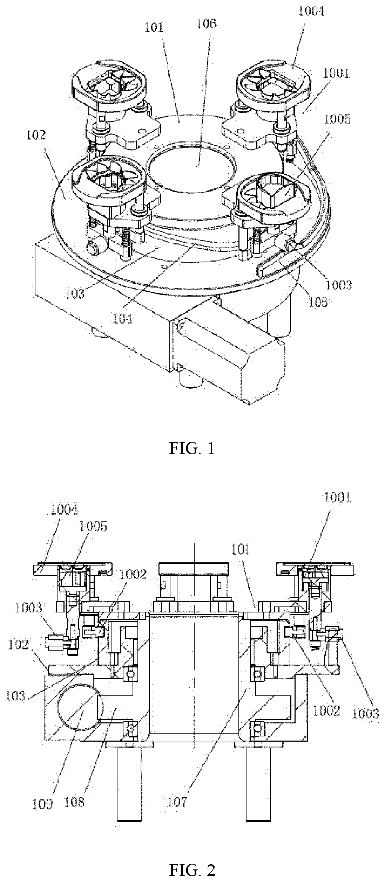

FIG. 1 is a schematic view showing an overall structure of a rotary table assembly;
FIG. 2 is a cross-sectional view of the rotary table assembly;

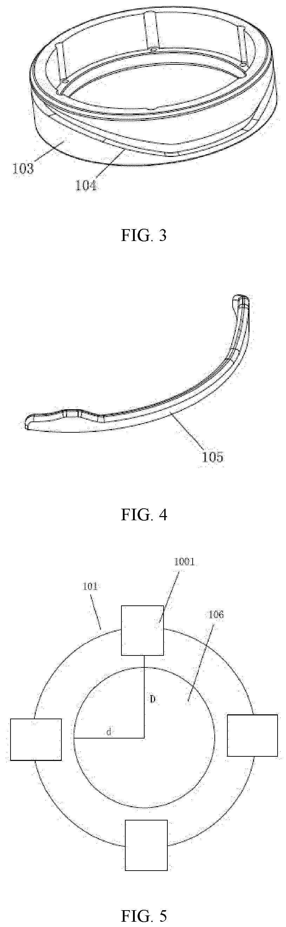

FIG. 3 is a schematic structural view of a guiding plate and a first guiding rail;
FIG. 4 is a schematic structural view of a second guiding rail on a base;
FIG. 5 illustrates that a distance D between an internal side of one of shaping molds and a center of the rotary table body is larger than a distance d between an internal side of the opening and the center of the rotary table body;

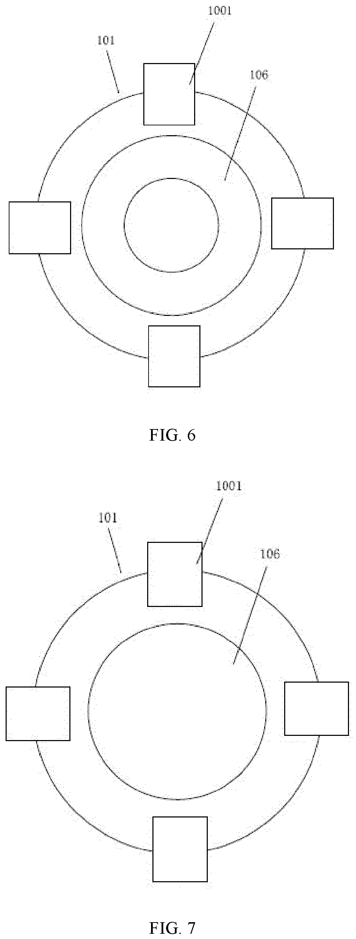

FIG. 6 is a schematic view showing a structure in which the opening is annular;
FIG. 7 illustrates that the shaping molds are located outside the opening;

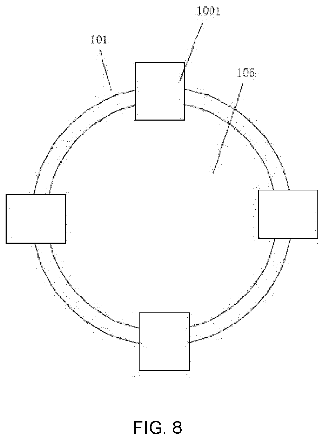

FIG. 8 illustrates that projections of the shaping molds in a vertical direction partially or completely fall within the opening;

Reference numerals:
rotary table body 101, base 102, guiding plate 103, first guiding rail 104, second guiding rail 105, opening 106, rotation sleeve 107, worm wheel 108, worm screw 109, shaping mold 1001, first roller 1002, second roller 1003, catch plate 1004, molding cup 1005.

### DETAILED DESCRIPTION OF ILLUSTRATIVE EMBODIMENTS

### Embodiment 1

A rotary table assembly of a stuffed food forming machine, which includes a rotary table body 101 defining an opening 106 configured for dough residue to fall into and collecting the dough residue, and shaping molds 1001 evenly distributed on the rotary table body 101. A distance between an internal side of one of the shaping molds 1001 and a center of the rotary table body 101 is configured to be larger than a distance between an internal side of the opening 106 and the center of the rotary table body 101. The opening 106 is a through hole penetrating the rotary table body 101. When a distance between an internal side of one of the shaping molds 1001 and a center of the rotary table assembly is larger than a distance between an internal side of the opening 106 and the center of the rotary table assembly, the dough residue may easily drop into the opening 106, so as to be collected. The motor drives the rotary table body 101 to rotate the shaping molds 1001 which are connected to the rotary table body 101. The dough residue after cutting enters the opening 106 on the rotary table body 101, so as to be collected. A base 102 and a guiding plate 103 which are arranged under the rotary table body 101 are separated from the rotary table body and are static during working. A guiding rail is provided on both the base 102 and the guiding plate 103 respectively. Guiding rollers on the shaping molds 1001 are guided by the guiding rail to drive the catch plate 1004 and the molds to move up and down respectively. According to the present application, the opening 106 on the rotary table assembly collects the dough residue and takes full advantage of the space below the rotary table assembly. A recycling bin may be provided below the opening 106 to collect the dough residue, or a processing mechanism may be provided below the opening 106 to process the dough residue for reuse. The above structure does not increase the size of the machine and requires no extra space for processing the dough residue, thereby solving the problem that the overall apparatus can not be further miniaturized.

### Embodiment 2

A rotary table assembly of a stuffed food forming machine, which includes a rotary table body 101 defining an opening 106 configured for dough residue to fall into and collecting the dough residue, and shaping molds 1001 evenly distributed on the rotary table body 101. A distance between an internal side of one of the shaping molds 1001 and a center of the rotary table body 101 is configured to be larger than a distance between an internal side of the opening 106 and the center of the rotary table body 101. The opening 106 is a through hole penetrating the rotary table body 101. When a distance between an internal side of one of the shaping molds 1001 and a center of the rotary table assembly is larger than a distance between an internal side of the opening 106 and the center of the rotary table assembly, the dough residue may easily drop into the opening 106, so as to be collected.

The opening 106 is continuously defined on the rotary table body 101, namely, there is no break along the opening, which guarantees a continuous collection of the dough residue when the rotary table body 101 is rotating. The structure of the opening 106 must be continuously arranged to collect the dough residue while the rotary table body 101 is rotating.

When the opening 106 is circular, it may be defined at the center of the rotary table body 101. Or when the opening 106 is annular, it may be defined at the center or a center-outward position of the rotary table body 101.

The opening 106 may penetrate an upper surface and a lower surface of the rotary table body 101.

Relative positions of the shaping molds 1001 and the opening 106 are as follows.

An upper surface of one of the shaping molds 1001 is located above an upper surface of the opening 106, and the one of shaping molds 1001 is arranged outside the opening 106. Or an upper surface of one of the shaping molds 1001 is located above an upper surface of the opening 106, and a projection of the one of shaping modes 1001 in a vertical direction partially or completely falls within the opening 106.

A structure of the rotary table body 101 is as follows.

The rotary table body 101 is rectangular, a circular or an irregular.

A rotation sleeve 107 connected with a worm wheel 108 is connected to a bottom of the rotary table body 101. The worm wheel 108 is connected with a worm screw 109, and the worm screw 109 is connected with a motor.

The motor drives the rotary table body 101 to rotate the shaping molds 1001 which are connected to the rotary table body 101. The dough residue after cutting enters the opening 106 on the rotary table body 101, so as to be collected. A base 102 and a guiding plate 103 which are arranged under the rotary table body 101 are separated from the rotary table body and are static during working. A guiding rail is provided on both the base 102 and the guiding plate 103 respectively. Guiding rollers on the shaping molds 1001 are guided by the guiding rail to drive the catch plate 1004 and the molds to move up and down respectively.

According to the present application, the opening 106 on the rotary table assembly collects the dough residue and takes full advantage of the space below the rotary table assembly. A recycling bin may be provided below the opening 106 to collect the dough residue, or a processing mechanism may be provided below the opening 106 to process the dough residue for reuse. The above structure does not increase the size of the machine and requires no extra space, thereby solving the problem that the overall apparatus can not be further miniaturized.

According to the present application, the opening 106 may be in any shape, as long as it is convenient for collection of the dough residue. When the distance between an internal side of one of the shaping molds 1001 and a center of the rotary table body 101 is larger than the distance between an internal side of the opening 106 and the center of the rotary table assembly, no matter the shaping molds 1001 are arranged outside the opening 106 or projections of the shaping modes 1001 in a vertical direction partially or completely fall within the structure of the opening 106, the dough residue may conveniently fall into the opening 106 without extra guiding device.

The present application adopts the motor to drive the worm screw 109 and the worm wheel 108 to drive the rotation sleeve 107 and the rotary table body 101 to rotate. The separate driving structure replaces the complicated cam mechanism under the rotary table body 101 and solves the problem of single motor driving all the parts. More space may be used for collection and processing of the dough residue.

### Embodiment 3

Based on embodiment 2 and embodiment 3, a base 102 is arranged under the rotary table body 101. A guiding plate 103 is arranged between the base 102 and the rotary table body 101, and the guiding plate 103 is a cylinder as a whole. A first guiding rail 104 is defined on an external surface of the guiding plate 103, and the first guiding rail 104 cooperates with a first roller 1002 on a catch plate 1004 on the shaping molds 1001 to move the catch plate 1004 up and down.

The guiding plate 103 is a continuous cylinder. At least one disconnected portion is defined on the cylinder of the guiding plate 103. The disconnected portion is partly or entirely disconnected. The guiding plate 103 may be provided at stations where structures of the shaping molds 1001 move up and down. The guiding plate 103 is not needed for stations where height will not be adjusted.

A second guiding rail 105 is defined on an edge of the base 102, and the second guiding rail 105 cooperates with a second roller 1003 of the molding cup 1005 on the shaping mold 1001 to move the molding cup 1005 up and down.

Specifically, the shaping molds 1001 adopts conventional structure. Each shaping mold 1001 includes a catch plate 1004 connected with a first roller 1002 below through a first connecting rod; and a molding cup 1005 provided in the catch plate 1004 and connected with a second roller 1003 below through a second connecting rod. Since the shaping molds 1001 are rotated with the rotating disc 101 while the guiding plate 103 and the base 102 remain still, the catch plate 1004 moves up and down by the first roller moving along a wave-shaped track in the first guiding rail 104 on the external surface of the guiding plate. The second guiding rail 105 cooperates with the second roller 1003 to move the molding cups 1005 up and down. As a result, different parts of the shaping molds 1001 move up and down at different stations.

The guiding plate 103 cooperates with the base 102 to move the catch plate 1004 and molding cups 1005 on the shaping mold 1001 up and down at different positions. Disconnected portions may be provided on both the first guiding rail 104 on the guiding plate 103 and the second guiding rail 105 on the base 102, namely, the first guiding rail 104 and second guiding rail 105 are only applied to stations where the heights need to be adjusted. Non-continuously arranged guiding rails reduce cost in material and are simple in structure.

## Claims

1. A rotary table assembly of a stuffed food forming machine, comprising:
a rotary table body (101) and
shaping molds (1001) evenly distributed on the rotary table body (101); and,
**characterized in that** the rotary table body (101) defines an opening (106) configured for dough residue to to fall into and collecting the dough residue, and wherein
a distance between an internal side of one of the shaping molds (1001) and a center of the rotary table body (101) is configured to be larger than a distance between an internal side of the opening (106) and the center of the rotary table body (101).

2. The rotary table assembly of the stuffed food forming machine of claim 1, **characterized in that**,
the opening (106) is configured to be continuously defined on the rotary table body (101).

3. The rotary table assembly of the stuffed food forming machine of claim 2, **characterized in that**,
the opening (106) is circular.

4. The rotary table assembly of the stuffed food forming machine of claim 2, **characterized in that**,
the opening (106) is annular.

5. The rotary table assembly of the stuffed food forming machine of claim 1, **characterized in that**,
the opening (106) is configured to penetrate an upper surface and a lower surface of the rotary table body (101).

6. The rotary table assembly of the stuffed food forming machine of claim 1, **characterized in that**,
an upper surface of one of the shaping molds (1001) is configured to be located above an upper surface of the opening (106); and
the one of shaping molds (1001) is configured to be arranged outside the opening (106).

7. The rotary table assembly of the stuffed food forming machine of claim 1, **characterized in that**,
an upper surface of one of the shaping molds (1001) is configured to be located above an upper surface of the opening (106); and
a projection of the one of shaping modes (1001) in a vertical direction is configured to partially or completely fall within the opening (106).

8. The rotary table assembly of the stuffed food forming machine of claim 1, **characterized in that**,
the rotary table body (101) is rectangular, circular or irregular.

9. The rotary table assembly of the stuffed food forming machine of any one of claims 1 to 8, **characterized in that**,
a rotation sleeve (107) connected with a worm wheel (108) is configured to be connected to a bottom of the rotary table body (101); and
wherein:
the worm wheel (108) is configured to be connected with a worm screw (109); and
the worm screw (109) is configured to be connected with a motor.

10. The rotary table assembly of the stuffed food forming machine of claim 9, **characterized in that**:
the rotary table assembly further comprises:
a base (102) arranged under the rotary table body (101); and
a guiding plate (103) arranged between the base (102) and the rotary table body (101); and
wherein:
the guiding plate (103) is a cylinder as a whole; and
a first guiding rail (104) is configured to be defined on an external surface of the guiding plate (103).

11. The rotary table assembly of the stuffed food forming machine of claim 10, **characterized in that**,
the guiding plate (103) is a continuous cylinder.

12. The rotary table assembly of the stuffed food forming machine of claim 10, **characterized in that**,
a disconnected portion is configured to be defined on the guiding plate (103); and
wherein:
the disconnected portion is configured to be partly or entirely disconnected.

13. The rotary table assembly of the stuffed food forming machine of claim 12, **characterized in that**,
at least one of the disconnected portion is configured to be defined.

14. The rotary table assembly of the stuffed food forming machine of claim 10, **characterized in that**:
the rotary table assembly further comprises:
a second guiding rail (105) defined on an outer edge of the base (102).

## Patentansprüche

1. Drehtischanordnung einer Formmaschine für gefüllte Lebensmittel, umfassend:
einen Drehtischkörper (101);
und Formgebungsformen (1001), die gleichmäßig auf dem Drehtischkörper (101) verteilt sind;
und **dadurch gekennzeichnet, dass** der Drehtischkörper (101) eine Öffnung (106) definiert, die dafür konfiguriert ist, dass Teigreste hineinfallen und die Teigreste sammeln, und wobei:
ein Abstand zwischen einer Innenseite einer der Formgebungsformen (1001) und
einer Mitte des Drehtischkörpers (101) so konfiguriert ist, dass er größer ist als ein Abstand zwischen einer Innenseite der Öffnung (106) und der Mitte des Drehtischs Tischkörper (101).

2. Drehtischanordnung der Formmaschine für gefüllte Lebensmittel nach Anspruch 1, **dadurch gekennzeichnet, dass** die Öffnung (106) so konfiguriert ist, dass sie am Drehtischkörper (101) durchgehend definiert ist.

3. Drehtischanordnung der Formmaschine für gefüllte Lebensmittel nach Anspruch 2, **dadurch gekennzeichnet, dass** die Öffnung (106) ist kreisförmig.

4. Drehtischanordnung der Formmaschine für gefüllte Lebensmittel nach Anspruch 2, **dadurch gekennzeichnet, dass** die Öffnung (106) ringförmig ist.

5. Drehtischanordnung der Formmaschine für gefüllte Lebensmittel nach Anspruch 1, **dadurch gekennzeichnet, dass** die Öffnung (106) so konfiguriert ist, dass sie eine obere Fläche und eine untere Fläche des Drehtischkörpers (101) durchdringt.

6. Drehtischanordnung der Formmaschine für gefüllte Lebensmittel nach Anspruch 1, **dadurch gekennzeichnet, dass** eine obere Oberfläche einer der Formgebungsformen (1001) so konfiguriert ist, dass sie sich über einer oberen Oberfläche der Öffnung(106) befindet; und die eine der Formgebungsformen (1001) dazu konfiguriert ist, außerhalb der Öffnung (106) angeordnet zu werden.

7. Drehtischanordnung der Formmaschine für gefüllte Lebensmittel nach Anspruch 1, **dadurch gekennzeichnet, dass** eine obere Oberfläche einer der Formgebungsformen (1001) so konfiguriert ist, dass sie sich über einer oberen Oberfläche der Öffnung(106) befindet; und eine Projektion des einen der Formgebungsmodi (1001) in einer vertikalen Richtung so konfiguriert ist, dass sie teilweise oder vollständig in die Öffnung (106) fällt.

8. Drehtischanordnung der Formmaschine für gefüllte Lebensmittel nach Anspruch 1, **dadurch gekennzeichnet, dass** der Drehtischkörper (101) rechteckig, kreisförmig oder unregelmäßig ist.

9. Drehtischanordnung der Formmaschine für gefüllte Lebensmittel nach einem der Ansprüche 1 bis 8, **dadurch gekennzeichnet, dass** eine mit einem Schneckenrad (108) verbundene Drehhülse (107) konfiguriert ist, um mit einem Boden des Drehtischkörpers (101) verbunden zu werden; und
worin:
das Schneckenrad (108) ist konfiguriert, um mit einer Schneckenschraube (109) verbunden zu werden; und die Schneckenschraube (109) ist konfiguriert, um mit einem Motor verbunden zu werden.

10. Drehtischanordnung der Formmaschine für gefüllte Lebensmittel nach Anspruch 9, **dadurch gekennzeichnet, dass** die Drehtischbaugruppe umfasst ferner:
eine Basis (102), die unter dem Drehtischkörper (101) angeordnet ist; und
eine Führungsplatte (103), die zwischen der Basis (102) und dem Drehtischkörper (101) angeordnet ist; und worin:
die Führungsplatte (103) als Ganzes ein Zylinder ist; und eine erste Führungsschiene (104) konfiguriert ist, um an einer Außenfläche der Führungsplatte (103) definiert zu werden.

11. Drehtischanordnung der Formmaschine für gefüllte Lebensmittel nach Anspruch 10, **dadurch gekennzeichnet, dass** die Führungsplatte (103) ein durchgehender Zylinder ist.

12. Drehtischanordnung der Formmaschine für gefüllte Lebensmittel nach Anspruch 10, **dadurch gekennzeichnet, dass** ein getrennter Abschnitt so konfiguriert ist, dass er auf der Führungsplatte (103) definiert wird; und worin:
der getrennte Abschnitt ist so konfiguriert, dass er teilweise oder vollständig getrennt ist.

13. Drehtischanordnung der Formmaschine für gefüllte Lebensmittel nach Anspruch 12, **dadurch gekennzeichnet, dass** mindestens einer der getrennten Abschnitte ist so konfiguriert, dass er definiert ist.

14. Drehtischanordnung der Formmaschine für gefüllte Lebensmittel nach Anspruch 10, **dadurch gekennzeichnet, dass** die Drehtischbaugruppe umfasst ferner:
eine zweite Führungsschiene (105), die an einer Außenkante der Basis (102) definiert ist.

## Revendications

1. Assemblage de table rotative d'une machine de formage d'aliments farcis, comprenant:
un corps de table rotative (101) ;
et des moules de formage (1001) uniformément répartis sur le corps de table rotative (101) ;
et **caractérisé en ce que** le corps de table rotative (101) définit une ouverture (106) configurée pour que les résidus de pâte tombent dans et recueillent les résidus de pâte,
et dans lequel:
une distance entre un côté interne de l'un des moules de formage (1001) et un centre du corps de table rotative (101) est configurée pour être plus grande qu'une distance entre un côté interne de l'ouverture (106) et le centre du plateau rotatif corps de table (101).

2. Ensemble à table rotative de la machine de formage d'aliments farcis selon la revendication 1, **caractérisé en ce que**,
l'ouverture (106) est configurée pour être définie en continu sur le corps de table rotative (101).

3. Ensemble à table rotative de la machine de formage d'aliments farcis selon la revendication 2, **caractérisé en ce que**,
l'ouverture (106) est circulaire.

4. Ensemble à table rotative de la machine de formage d'aliments farcis selon la revendication 2, **caractérisé en ce que**, l'ouverture (106) est annulaire.

5. Ensemble à table rotative de la machine de formage d'aliments farcis selon la revendication 1, **caractérisé en ce que**, l'ouverture (106) est configurée pour pénétrer une surface supérieure et une surface inférieure du corps de table rotative (101).

6. Ensemble à table rotative de la machine de formage d'aliments farcis selon la revendication 1, **caractérisé en ce que**, une surface supérieure de l'un des moules de formage (1001) est configurée pour être située au-dessus d'une surface supérieure de l'ouverture (106) ; et l'un des moules de formage (1001) est configuré pour être disposé à l'extérieur de l'ouverture (106).

7. Ensemble à table rotative de la machine de formage d'aliments farcis selon la revendication 1, **caractérisé en ce que**, une surface supérieure de l'un des moules de formage (1001) est configurée pour être située au-dessus d'une surface supérieure de l'ouverture (106) ;
et une projection de l'un des modes de mise en forme (1001) dans une direction verticale est configurée pour tomber partiellement ou complètement à l'intérieur de l'ouverture (106).

8. Ensemble à table rotative de la machine de formage d'aliments farcis selon la revendication 1, **caractérisé en ce que**, le corps de table rotative (101) est rectangulaire, circulaire ou irrégulier.

9. Ensemble à table rotative de la machine de formage d'aliments farcis selon l'une quelconque des revendications 1 à 8, **caractérisé en ce que**,
un manchon de rotation (107) connecté à une roue à vis sans fin (108) est configuré pour être connecté à un fond du corps de table rotative (101) ;
et où:
la roue à vis sans fin (108) est configurée pour être reliée à une vis sans fin (109); et
la vis sans fin (109) est configurée pour être reliée à un moteur.

10. Ensemble à table rotative de la machine de formage d'aliments farcis selon la revendication 9, **caractérisé en ce que**:
l'ensemble de table rotative comprend en outre:
une base (102) agencée sous le corps de table rotative (101) ;
et une plaque de guidage (103) disposée entre la base (102) et le corps de table rotative (101) ; et où:
la plaque de guidage (103) est un cylindre dans son ensemble ;
et un premier rail de guidage (104) est configuré pour être défini sur une surface externe de la plaque de guidage (103).

11. Ensemble à table rotative de la machine de formage d'aliments farcis selon la revendication 10, **caractérisé en ce que**,
la plaque de guidage (103) est un cylindre continu.

12. Ensemble à table rotative de la machine de formage d'aliments farcis selon la revendication 10, **caractérisé en ce que**,
une partie déconnectée est configurée pour être définie sur la plaque de guidage (103) ; et où:
la partie déconnectée est configurée pour être partiellement ou totalement déconnectée.

13. Ensemble à table rotative de la machine de formage d'aliments farcis selon la revendication 12, **caractérisé en ce que**,
au moins l'une des parties déconnectées est configurée pour être définie.

14. Ensemble à table rotative de la machine de formage d'aliments farcis selon la revendication 10, **caractérisé en ce que**:
l'ensemble de table rotative comprend en outre:
un deuxième rail de guidage (105) défini sur un bord extérieur de la base (102).
